## Europäisches Patentamt

## European Patent Office

## Office européen des brevets

(19)

(11) Veröffentlichungsnummer: **0 197 094 B1**

(12) **EUROPÄISCHE PATENTSCHRIFT**

(45) Veröffentlichungstag der Patentschrift:
**07.12.88**

(21) Anmeldenummer: **85904969.4**

(22) Anmeldetag: **01.10.85**

(86) Internationale Anmeldenummer:
**PCT/EP 85/00506**

(87) Internationale Veröffentlichungsnummer:
**WO 86/02028 (10.04.86 Gazette 86/8)**

(51) Int. Cl.⁴: **B 23 K 9/08**

(54) **VORRICHTUNG ZUM VERSCHWEISSEN VON METALLISCHEN WERKSTÜCKEN.**

(30) Priorität: **05.10.84 DE 3436633**

(43) Veröffentlichungstag der Anmeldung:
**15.10.86 Patentblatt 86/42**

(45) Bekanntmachung des Hinweises auf die Patenterteilung:
**07.12.88 Patentblatt 88/49**

(84) Benannte Vertragsstaaten:
**DE FR GB IT**

(56) Entgegenhaltungen:
**EP-A- 0 040 673**
**DE-A- 2 258 417**
**GB-A- 1 600 894**

(73) Patentinhaber: **KUKA Schweissanlagen & Roboter GmbH, Blücherstrasse 144, D-8900 Augsburg (DE)**

(72) Erfinder: **MAZAC, Karel, Dahlienweg 1, D-8904 Friedberg (DE)**

(74) Vertreter: **Ernicke, Hans-Dieter, Dipl.-Ing., Schwibbogenplatz 2b, D-8900 Augsburg (DE)**

ACTORUM AG

**Beschreibung**

Die Erfindung betrifft eine Vorrichtung zum Verschweissen von metallischen Werkstücken mit rohrförmigem Querschnitt durch einen längs einer geschlossenen, in einer Ebene senkrecht zur Werkstückachse liegenden Schweissnahtbahn magnetisch bewegten Lichtbogen, die mindestens zwei die Nahtbahn mit ihren Polflächen ringförmig umgebende, gleichpolige Magnete aufweist. Diese Magnete sind, wie beispielsweise bei der Anordnung gemäss der DE-C-30 18 199, in der Regel radial zur Nahtbahn angeordnet. Ihre jeweils eine Spulenwicklung tragenden, magnetischen Kerne haben an ihrem der Nahtbahn zugewandten Ende jeweils eine dem Verlauf der Nahtbahn angepasste, diese annähernd vollständig überdeckende, bogenartige Ausnehmung, an der sich die Polflächen befinden.

Bei solchen Vorrichtungen zum magnetischen Lichtbogenschweissen bilden die Polflächen eine die Nahtbahn umgebende zylindrische Fläche. Die Querschnittsform dieser Zylinderfläche entspricht der Nahtbahn, d.h. dem Aussenquerschnitt der Werkstücke, z.B. Ringe, Rohre, Kappen, Stutzen oder dergleichen verschiedenen Querschnitts oder verschiedener geometrischer Form. Die Querschnittsform muss nicht unbedingt kreisförmig sein. Die Achse der Zylinderfläche verläuft zur Werkstückachse parallel bzw. ist mit dieser identisch.

Nachteilig ist beim Schweissen mit solchen Vorrichtungen jedoch die Verschmutzung der Polflächen durch Schweissspritzer, die den Lichtbogenlauf negativ beeinflussen, ungleichmässige Schweissnähte ergeben und Probleme mit der Spulenisolation verursachen. Die Polflächen müssen daher ständig in kurzen zeitlichen Abständen gereinigt werden. Bei teil- oder vollautomatischen Schweissmaschinen dieser Art ist daher zur Spritzerbeseitigung eine Zusatzeinrichtung, in der Regel eine Bürsteneinrichtung, erforderlich.

Der Erfindung liegt die Aufgabe zugrunde, diese Nachteile zu beseitigen und die Verschmutzung der Polflächen durch Schweissspritzer zu verhindern, so dass sich im Schweissbereich keine Spritzer mehr ansammeln und den Schweissvorgang stören können, und auch der Raum zwischen der Spule und dem Zentrumspanner spritzerfrei bleibt.

Die erfindungsgemässe Lösung dieser Aufgabe besteht darin, dass die Polflächen mit einem sie bedeckenden Schutzring versehen sind, der eine die Nahtbahn umgebende, zur Werkstückachse hin abgeschrägte Innenfläche aufweist. Der Schutzring ist zum Werkstück hin abgeschrägt und dessen Form angepasst. Bei Werkstücken mit kreisförmigem Querschnitt (z. B. Rohren), also bei kreisförmiger Nahtbahn, ist somit die Ringinnenfläche Teil einer Kegelmantelfläche, wobei die Kegelachse und die Werkstückachse zusammenfallen. Prallen beim Schweissen Spritzer auf die Ringinnenfläche auf, so werden sie nun infolge der erfindungsgemässen Schrägneigung derselben nach aussen abgelenkt. Die abgeschrägte Innenfläche des Schutzrings wirkt also als Abweisfläche für Schweissspritzer. Als Material für den Schutzring wird vorzugsweise Kupfer angewendet. Es können auch andere Materialien, z. B. Keramik oder Metalle eingesetzt werden, sofern sie das magnetische Feld nicht negativ beeinflussen. Eine gute Kühlung ist vorteilhaft. Im Rahmen der Erfindung erweist sich eine Neigung der Ringinnenfläche gegenüber der Werkstückachse von etwa 50° und mehr als besonders günstig. Der Winkel bzw. die Neigung wird durch die Bauteilform und durch die Ausbildung der Spule beeinflusst.

Da die Schweissvorrichtung in der Regel stets zwei oder mehr im Werkstückbereich radial angeordnete Magnete umfasst, die mit ihren die Polflächen bildenden Ausnehmungen in bekannter Weise wie die Segmente eines Kreises oder einer sonstigen, geschlossenen Kurve die zu verschweissenden Werkstücke bzw. die Nahtbahn umgeben, empfiehlt es sich zur einfacheren Montage, dass der Schutzring entsprechend der Anzahl der Magnete in einzelne Segmente aufgeteilt ist, die dann an den Polflächen der einzelnen Magnete angebracht sind.

Infolge der Abschrägung des Schutzringes kommt dieser an der einen Seite seiner Innenfläche dem Werkstück besonders nahe, so dass nur ein ganz schmaler Spalt zwischen Ring und Werkstück verbleibt. Dieser Spalt eignet sich gut für die Zuführung eines Schutzgases. Dieses Gas kann beispielsweise über eine Leitung von der Seite her durch den Spalt hindurch zur Schweissstelle geführt werden.

Die Erfindung ist in der Zeichnung beispielsweise und schematisch dargestellt. Es zeigt:

Fig. 1 ein Ausführungsbeispiel bei einer Anordnung mit zwei Magneten,

Fig. 2 eine Seitenansicht der Ausführungsform entlang der Linie II–II gemäss Fig. 1 und

Fig. 3 eine Variante zu der Anordnung gemäss Figur 1 und 2.

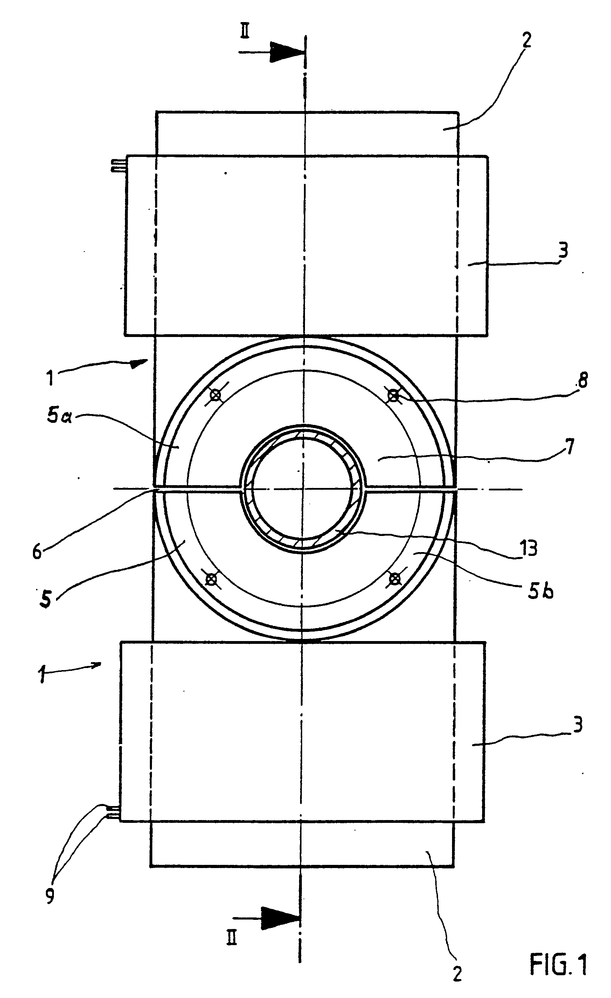

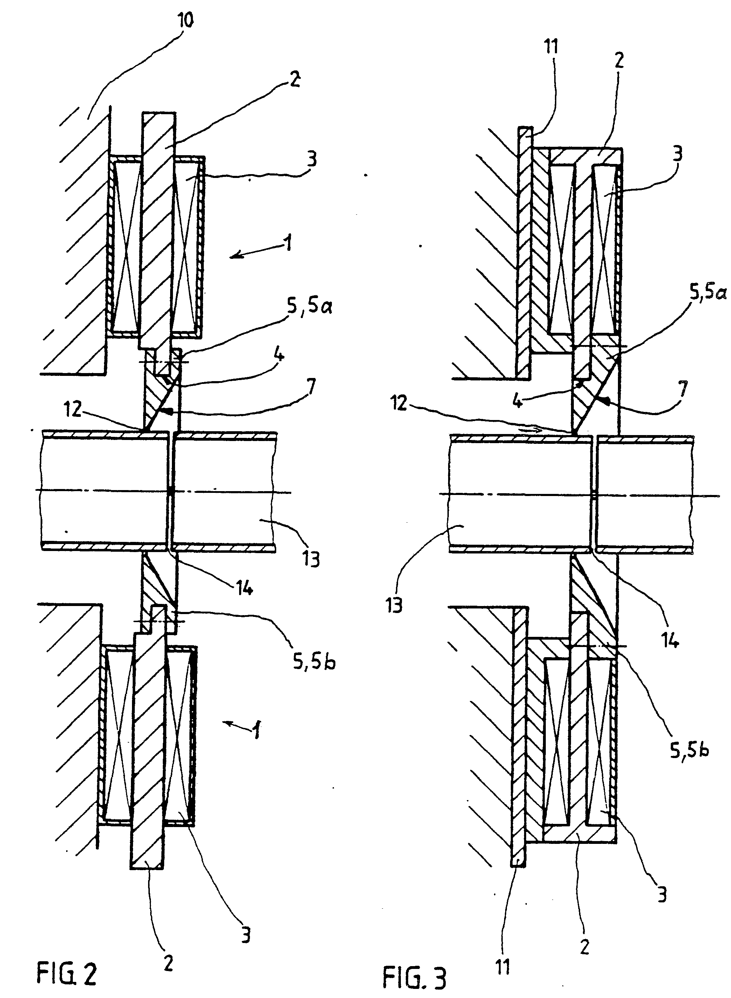

Bei der Anordnung gemäss Figur 1 und 2 handelt es sich um eine Schweissvorrichtung mit zwei Elektromagneten 1, die in bekannter Weise jeweils aus einem eine Wicklung 3 tragenden magnetischen Kern 2 bestehen. Diese Kerne umgeben mit jeweils einer halbkreisförmigen Ausnehmung in bekannter Weise die Nahtbahn bzw. die hier als Rohre 13 mit kreisförmigem Querschnitt ausgebildeten Werkstücke, so dass jeweils nur ein schmaler Luftspalt 6 an gegenüberliegenden Seiten der kreisförmigen Nahtbahn verbleibt.

Die Kerne 2 sind, wie aus dem Querschnitt in Figur 2 ersichtlich, bei dem hier dargestellten Ausführungsbeispiel im Bereich der Ausnehmung abgestuft, so dass sich nur eine schmale Polfläche 4 ergibt, die die Nahtbahn zylindrisch umgibt. Auf diese Polflächen ist bei beiden Magnetkernen 2, über die gesamte Ausnehmung sich erstreckend, jeweils die Hälfte eines Schutzringes 5 aufgesetzt, der eine zur Werkstückachse hin abgeschrägte Innenfläche 7 aufweist. Von dieser (wegen der Kreisform der Nahtbahn konischen) Innenfläche 7 prallen radial nach aussen fliegende Schweissspritzer nach aussen ab. Zur Befestigung des Schutzringes 5 sind beim hier dargestellten Ausführungsbeispiel durch den Ring und den Kern 2 verlaufende Befestigungsmittel 8 vorgesehen. Mit 9 sind elektrische Anschlussleitungen für die Spulen 3 bezeichnet. Mit 10 ist ein Teil der Schweissanordnung angedeutet, an dem die Magnete 1 befestigt sind.

Bei der Ausführung gemäss Figur 3 ist der einzelne aus dem Kern 2 und der Spule 3 bestehende Magnet 1 über eine Isolierung 11 an der Maschine befestigt. Durch die Schrägneigung der Ringinnenfläche 7 ergibt sich zwischen dem Schutzring 5 und dem zu verschweissenden Rohr 13 ein sehr schmaler, das Rohr 13 umgebender Spalt 12 in unmittelbarer Nachbarschaft der Schweissstelle 14, durch den ein Schutzgas in besonders gleichmässig verteilter Form herangeführt werden kann.

Bei dem dargestellten Beispiel mit nur 2 Magneten 1, das im allgemeinen die einfachste Ausführungsform darstellt, ist der Schutzring 5 in zwei Segmente 5a und 5b aufgeteilt, die hier genau je einer Ringhälfte entsprechen. Bei Anordnungen mit mehr als zwei Magneten kann der Schutzring 5 dann natürlich in mehrere Segmente entsprechend der Zahl der Magnete und entsprechend der Bogenlänge ihrer Polschuhe unterteilt sein.

## Patentansprüche

1. Vorrichtung zum Verschweissen von metallischen Werkstücken mit rohrförmigem Querschnitt durch einen längs einer geschlossenen, in einer Ebene senkrecht zur Werkstückachse liegenden Schweissnahtbahn magnetisch bewegten Lichtbogen, die mindestens zwei, die Nahtbahn mit ihren Polflächen ringförmig umgebende, gleichpolige Magnete aufweist, dadurch gekennzeichnet, dass die Polfläche (4) mit einem sie bedeckenden Schutzring (5) versehen sind, der eine die Nahtbahn umgebende, zur Werkstückachse hin abgeschrägte Innenfläche (7) aufweist.

2. Vorrichtung nach Anspruch 1, dadurch gekennzeichnet, dass der Winkel zwischen der Neigung der Ringinnenfläche (7) des Schutzringes (5) und der Werkstückachse etwa 50° und mehr beträgt.

3. Vorrichtung nach Anspruch 1 oder 2, dadurch gekennzeichnet, dass der Schutzring (5) entsprechend der Anzahl der Magnete (1) in einzelne Segmente aufgeteilt ist.

4. Vorrichtung nach Anspruch 1 oder folgenden, dadurch gekennzeichnet, dass eine Schutzgasströmung durch den Spalt (12) zwischen Schutzring (5) und Werkstück (13) geführt ist.

## Claims

1. Apparatus for welding metal work pieces of tubular cross-section by an arc moved magnetically along a closed weld seam path located in a plane perpendicular to the work piece axis, which comprises at least two homopolar magnets surrounding the seam path with their polar surfaces in an annular manner, characterised in that the polar surfaces (4) are provided with a protective ring (5) covering them, which ring has an inner surface (7) surrounding the seam path and bevelled towards the work piece axis.

2. Apparatus according to Claim 1, characterised in that the angle between the inclination of the inner annular surface (7) of the protective ring (5) and the work piece axis amounts to approximately 50° and more.

3. Apparatus according to Claim 1 or 2, characterised in that the protective ring (5) is divided into individual segments corresponding to the number of magnets (1).

4. Apparatus according to Claim 1 or the following, characterised in that a stream of inert gas is guided through the gap (12) between the protective ring (5) and work piece (13).

## Revendications

1. Dispositif pour souder des pièces métalliques usinées possédant une section transversale tubulaire, au moyen d'un arc électrique déplacé magnétiquement le long d'une ligne de soudage fermée, située dans un plan perpendiculaire à l'axe de la pièce usinée et possédant au moins deux aimants de même polarité entourant sous une forme annulaire la ligne de soudage par ses surfaces polaires, caractérisé par le fait que les surfaces polaires (4) sont équipées d'une bague de protection (5), qui les recouvre, et possèdent une surface intérieure (7) entourant la ligne de soudage et biseautée en direction de l'axe de la pièce usinée.

2. Dispositif suivant la revendication 1, caractérisé par le fait que l'angle d'inclinaison entre la surface intérieure (7) de la bague de protection (5) et l'axe de la pièce usinée est égal approximativement à 50° et plus.

3. Dispositif suivant la revendication 1 ou 2, caractérisé par le fait que la bague de protection (5) est subdivisée en segments individuels, conformément au nombre des aimants (1).

4. Dispositif suivant la revendication 1 ou les suivantes, caractérisé par le fait qu'un courant de gaz de protection circule dans la fente (12) présente entre la bague de protection (5) et la pièce usinée (13).

FIG.1

FIG. 2

FIG. 3